Europäisches Patentamt

European Patent Office

Office européen des brevets

(11) Veröffentlichungsnummer: **0 207 215**
B1

(12) **EUROPÄISCHE PATENTSCHRIFT**

(45) Veröffentlichungstag der Patentschrift:
17.01.90

(51) Int. Cl.⁴: **B23Q 1/02**

(21) Anmeldenummer: **86102399.2**

(22) Anmeldetag: **25.02.86**

(54) **Linearführung.**

(30) Priorität: **03.09.85 DE 8525063 U
14.06.85 DE 3521415**

(43) Veröffentlichungstag der Anmeldung:
**07.01.87 Patentblatt 87/2**

(45) Bekanntmachung des Hinweises auf die Patenterteilung:
**17.01.90 Patentblatt 90/3**

(84) Benannte Vertragsstaaten:
**AT BE CH DE FR GB IT LI LU NL SE**

(56) Entgegenhaltungen:
**EP-A- 0 107 776
DE-A- 3 040 711
FR-A- 2 477 453**

**Werkzeuge und Werkzeugmaschinen , v. Bruins/Dräger,
Band II, 2. Auflage, Verlag Carl Hauser, München, Wien,
Seite 48, Bild 43**

(73) Patentinhaber: **Saxenhammer, Bernd, Hahnerberger
Strasse 51, D-5600 Wuppertal 12(DE)**

(72) Erfinder: **Saxenhammer, Bernd, Hahnerberger
Strasse 51, D-5600 Wuppertal 12(DE)**

(74) Vertreter: **Patentanwälte Dr. Solf & Zapf,
Schlossbleiche 20 Postfach 13 01 13,
D-5600 Wuppertal 1(DE)**

**Beschreibung**

Die Erfindung betrifft eine Linearführung, bestehend aus mindestens einer zylindrischen Führungswelle, die mit einem Ansatzsteg parallel verlaufend verbunden, insbesondere verschraubt ist, und mindestens einem auf der Führungswelle linear beweglich geführten Schlitten, in dem hierzu mindestens eine zylinderförmige Kugelbüchse angeordnet ist, wobei die Führungswelle auf dem Ansatzsteg aufliegt und die Kugelbüchse und der Schlitten im Verbindungsbereich zwischen dem Ansatzsteg der Führungswelle parallel zu diesen angeordnete, schlitzförmige Durchtrittsöffnungen für den Ansatzsteg aufweisen.

Derartige Linearführungen, wie beispielsweise in der Literaturstelle "Werkzeuge und Werkzeugmaschinen", Bruins/Dräger, Band II, 2. Auflage, Verlag Carl Hanser, München, Wien, auf Seite 48 in Bild 43 dargestellt, werden im Maschinenbau überall dort verwendet, wo es auf eine spielfreie, aber leichtgängige Längsführung ankommt. Dies ist beispielsweise bei Fräsmaschinen zum Werkstückvorschub der Fall. Die Führungswelle der bekannten Linearführung ist über ihre gesamte Länge von einem Ansatzsteg eines Maschinenteils unterstützt, um Durchbiegungen bei hohen Belastungen zu vermeiden. Die Kugelbüchse und der Schlitten weisen daher jeweils eine schlitzförmige Durchtrittsöffnung für den Ansatzsteg auf, wobei die Winkelhalbierende des Öffnungswinkels dieser Durchtrittsöffnung vertikal verläuft, d.h. die Durchtrittsöffnung weist genau vertikal nach unten. Bei derartigen, sogenannten offenen Kugelbüchsen ist aber die Belastbarkeit für radial von außen wirkende Kräfte nicht über den gesamten Umfang konstant. Wirkt nämlich eine Kraft gegen die Öffnungsrichtung, so beträgt die Belastbarkeit, d.h. die sogenannte Tragzahl (gemessen in Newton), nur etwa 60 bis 70% der in Öffnungsrichtung gemessenen Nenntragzahl der Kugelbüchse. Bei einem Einbau der Kugelbüchse in der beschriebenen Weise führt dies zu dem Nachteil, daß vertikal von unten wirkende Kräfte, die beispielsweise bei spanabhebenden Bearbeitungsvorgängen (Fräsen) in erheblichem Maß auftreten können, zu erhöhtem Verschleiß der Kugelbüchsen führen. Weiterhin ist bei der bekannten Linearführung von Nachteil, daß der die Führungswelle unterstützende Ansatzsteg einstückig mit dem Maschinenteil ausgebildet ist. Die Linearführung ist daher praktisch Bestandteil des Maschinenteils, so daß eine Verwendung der Führung auf dieses Maschinenteil beschränkt ist. Schließlich erfordert es bei der bekannten Linearführung einen großen Arbeitsaufwand, einen Antrieb für die lineare Bewegung des Schlittens vorzusehen, indem beispielsweise Gewindespindeln mit den entsprechenden Muttern extern an der Linearführung befestigt werden müßten.

Ausgehend von diesem Stand der Technik liegt der Erfindung nun die Aufgabe zugrunde, eine Linearführung zu schaffen, bei der die Tragzahlen für vertikal von oben und unten wirkende Kräfte im wesentlichen gleich sind und die universell einsetzbar und leicht zu montieren sowie letztlich auch kostengünstig in der Herstellung ist, wobei vorzugsweise auch mit einfachen Mitteln ein Antrieb integrierbar sein soll.

Erfindungsgemäß wird dies dadurch erreicht, daß der Ansatzsteg längs einer seitlichen Oberkante einer Unterstützungsprofilschiene ausgebildet und die Führungswelle derart mit der Unterstützungsprofilschiene verbunden ist, daß die Winkelhalbierende des Öffnungswinkels $\alpha$ der schlitzförmigen Durchtrittsöffnung der Kugelbüchse in einem spitzen Winkel $\beta$, der größer als 0° und kleiner als 90° ist, schräg zur vertikalen Mittelebene der Unterstützungsprofilschiene verläuft.

Die Kugelbüchsen sind folglich derart angeordnet, daß bei einer vertikalen Krafteinwirkung sowohl von oben als auch von unten diese nicht gegen die Öffnungsrichtung der Kugelbüchsen angreifen kann, wodurch die Tragzahlen für diese Belastungen praktisch gleich sind. Dabei ist es vorteilhaft, wenn der spitze Winkel derart bemessen ist, daß er zusammen mit dem halben Öffnungswinkel der Kugelbüchsen einen rechten Winkel ergibt. Durch diese vorteilhafte Ausgestaltung sind die Kugelbüchsen derart in dem Schlitten angeordnet, daß ein Schenkel des Öffnungswinkels der schlitzförmigen Durchtrittsöffnung parallel zur Horizontalen verläuft, so daß die Unterstützungsprofilschienen mit einer ebenen, horizontalen Oberfläche ausgebildet werden können. Insbesondere wenn an einer Unterstützungsprofilschiene zwei Führungswellen befestigt sind, ergibt sich somit der Vorteil, daß in dem Zwischenraum zwischen den Führungswellen auf einfache Weise Antriebsmittel integrierbar sind. Außerdem ist die erfindungsgemäße Ausbildung insofern von Vorteil, als die Unterstützungsprofilschiene universell an beliebigen Maschinenteilen befestigbar ist, wozu sie lediglich eine Befestigungslochreihe aufweist, so daß die Anzahl der erforderlichen Verschraubungen auf ein Mindestmaß beschränkt ist.

Weitere vorteilhafte Ausgestaltungsmerkmale der Erfindung sind in den Unteransprüchen sowie der nachfolgenden Beschreibung enthalten.

Anhand von in der Zeichnung dargestellten Ausführungsbeispielen wird im folgenden die Erfindung näher erläutert. Dabei zeigen:

Fig. 1 eine Perspektivansicht einer ersten Ausführungsform einer erfindungsgemäßen Linearführung,

Fig. 2 eine Perspektivansicht einer zweiten Ausführungsform einer erfindungsgemäßen Linearführung,

Fig. 3 eine Teil-Stirnansicht aus Richtung des Pfeiles III gemäß Fig. 1, teilweise geschnitten,

Fig. 4 eine Stirnansicht aus Richtung des Pfeiles IV gemäß Fig. 1, teilweise geschnitten,

Fig. 5 eine Stirnansicht aus Richtung des Pfeiles V gemäß Fig. 2, ebenfalls teilweise geschnitten,

Fig. 6 eine Perspektivansicht der Linearführung gemäß Fig. 2 mit integriertem Antrieb,

Fig. 7 eine Stirnansicht aus Richtung des Pfeiles VII gemäß Fig. 6, teilweise geschnitten, und

Fig. 8 eine Stirnansicht aus Richtung des Pfeiles VIII gemäß Fig. 6, teilweise geschnitten.

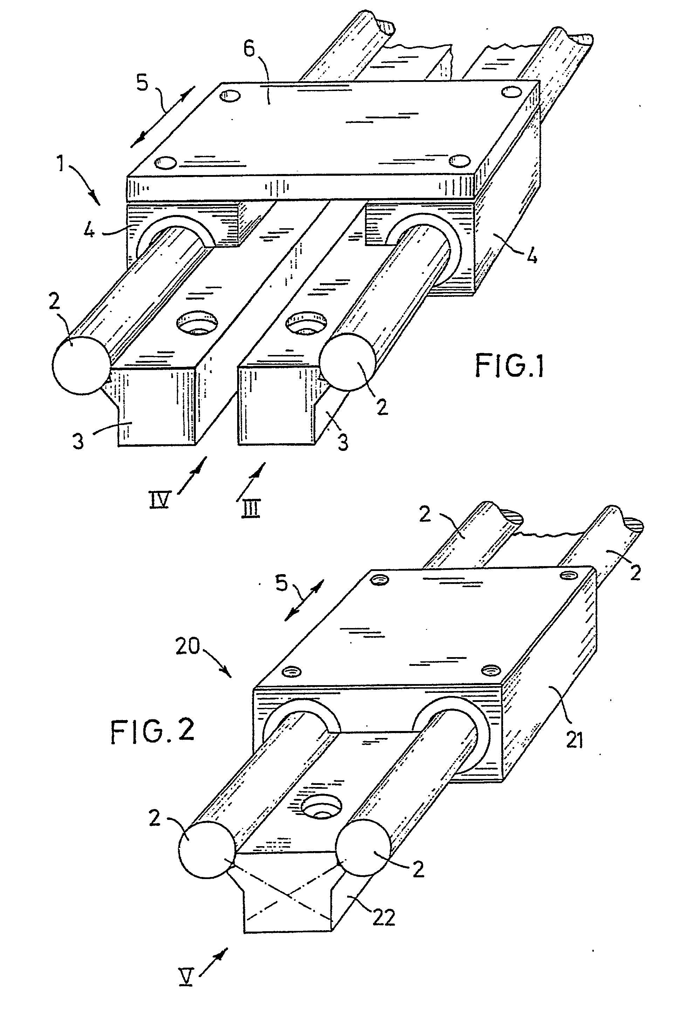

Die Linearführung 1 gemäß Fig. 1 besteht aus zwei Führungswellen 2, die jeweils mit einer Unterstützungsprofilschiene 3 verbunden sind. Auf den Führungswellen 2 sind Schlitten 4 linear beweglich geführt, was durch einen Doppelpfeil 5 angedeutet ist. Die beiden Führungswellen 2 sind in zueinander paralleler Zuordnung mittels der Unterstützungsprofilschienen 3 auf einer Arbeitsfläche montiert. Die beiden Einzelschlitten 4 sind mit einer Brücke 6 verbunden.

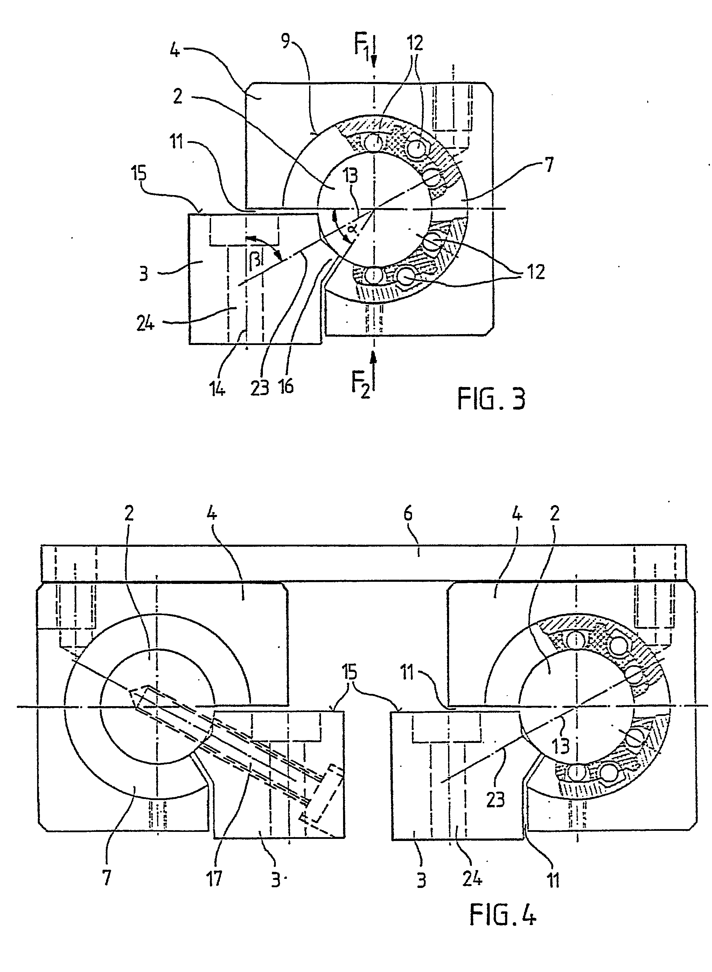

Wie aus Fig. 3 und 4 ersichtlich ist, sind zur spielfreien Führung der Schlitten 4 in diesen zylinderförmige, die Führungswellen 2 umgebende Kugelbüchsen 7 in Durchgangsbohrungen 9 angeordnet. Da die Führungswellen 2 aber über ihre gesamte Länge durch die Unterstützungsprofilschienen 3 unterstützt sind, weisen die Kugelbüchsen 7 und die Schlitten 4 im Verbindungsbereich zwischen der Führungswelle und der Unterstützungsprofilschiene parallel zu diesen angeordnete schlitzförmige Durchtrittsöffnungen 11 für die Unterstützungsprofilschiene 3 auf. Bei den Kugelbüchsen 7 handelt es sich um herkömmliche Linear-Wälzlager mit einer Anzahl von endlosen Kugelumläufen 12, die unbegrenzte Hublängen ermöglichen.

Erfindungsgemäß sind die Führungswellen 2 derart mit den Unterstützungsprofilschienen 3 verbunden, daß die Winkelhalbierende 13 des Öffnungswinkels $\alpha$ der schlitzförmigen Durchtrittsöffnung 11 der Kugelbüchsen 7 in einem spitzen Winkel $\beta$ zur vertikalen Mittelebene 14 der Unterstützungsprofilschienen 3 angeordnet ist. Dadurch sind die Belastungen oder Tragzahlen für Kräfte, die aus Richtung der eingezeichneten Pfeile $F_1$ und $F_2$ einwirken, gleich groß. Dabei ist es zweckmäßig, wenn der spitze Winkel $\beta$ derart bemessen ist, daß er zusammen mit dem halben Öffnungswinkel $\alpha/2$ der Kugelbüchsen 7 einen rechten Winkel ergibt, da hierdurch die Unterstützungsprofilschienen 3 mit einer ebenen, horizontalen Oberfläche 15 ausgebildet sein können, die zur Montage von oben frei zugänglich ist. Beträgt beispielsweise der Kugelbüchsen-Öffnungswinkel $\alpha = 56°$, so ergibt sich mit der erfindungsgemäßen Bemessungsregel $\beta = 90° - 56°/2 = 62°$. Dabei weisen die Unterstützungsprofilschienen 3 vorteilhafterweise im wesentlichen einen rechteckigen Querschnitt und längs einer seitlichen Oberkante einen Ansatzsteg 16 zur Auflage einer Führungswelle 2 auf. Die Verschraubung mit den Führungswellen 2 erfolgt mittels Schrauben 17 (Fig. 4), die sich schräg von unten durch die Unterstützungsprofilschiene 3 in Innengewinde der Führungswelle 2 erstrecken.

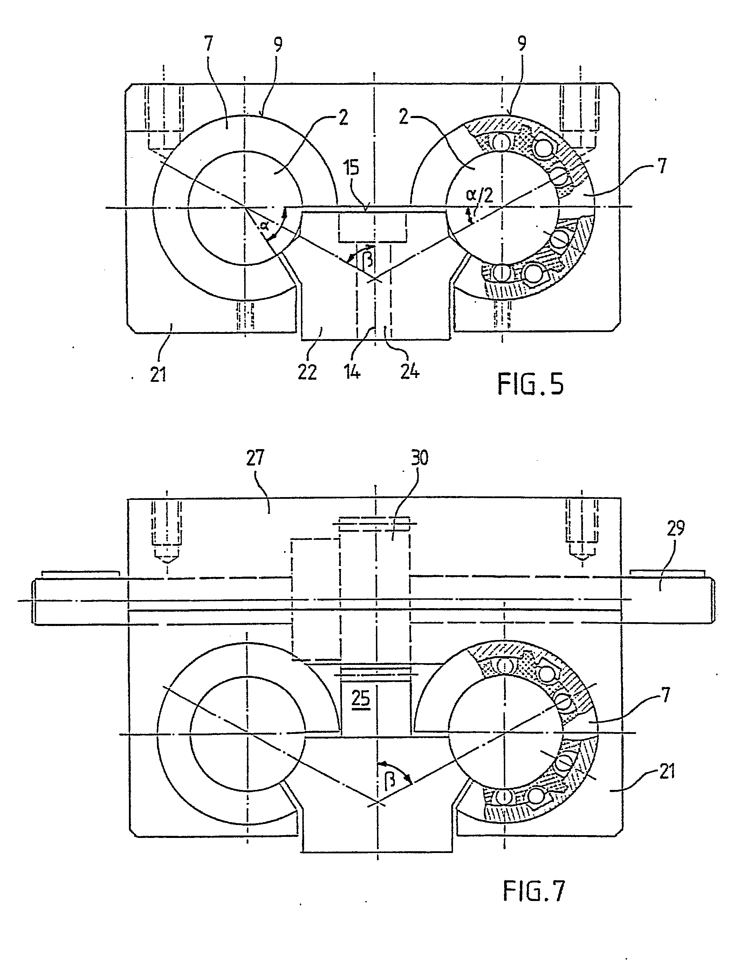

Die Linearführung 20 gemäß Fig. 2 und Fig. 5 weist ebenfalls zwei Führungswellen 2 auf. Diese sind aber vorteilhafterweise an einer gemeinsamen Unterstützungsprofilschiene 22 befestigt, die erfindungsgemäß ebenfalls im wesentlichen einen rechteckigen Querschnitt aufweist, jedoch ist längs beider seitlichen Oberkanten jeweils ein Ansatzsteg 16 zur Auflage einer Führungswelle 2 derart ausgebildet, daß die beiden Führungswellen 2 in symmetrischer Anordnung bezüglich der vertikalen Mittelebene 14 der Unterstützungsprofilschiene 22 befestigt sind. Dabei sind die Führungswellen 2 ebenfalls in der bereits beschriebenen erfindungsgemäßen Weise mit den Unterstützungsprofilschienen 22 verbunden. Für diese Linearführung 20 sind Schlitten 21 vorgesehen, die zur Aufnahme der beiden Führungswellen 2 zwei zueinander parallele Durchgangsbohrungen 9 aufweisen, in denen jeweils zwei Kugelbüchsen 7 axial hintereinander angeordnet sind. Der Schlitten 21 kann hierdurch neben einer hohen Belastung in beiden vertikalen Richtungen auch ein um eine vertikale Achse wirkendes Drehmoment aufnehmen.

Die Ansatzstege 16 beider Ausführungsformen der Unterstützungsprofilschienen 3, 22 sind zweckmäßigerweise derart ausgerichtet, daß ihre Mittellinien 23 mit der Winkelhalbierenden 13 des Öffnungswinkels $\alpha$ der Durchtrittsöffnung 11 der Kugelbüchsen 7 zusammenfallen.

Erfindungsgemäß weisen die Unterstützungsprofilschienen 3, 22 vertikale Befestigungsbohrungen 24 auf, deren Achsen auf der vertikalen Mittelebene 14 der Unterstützungsprofilschienen 3, 22 liegen.

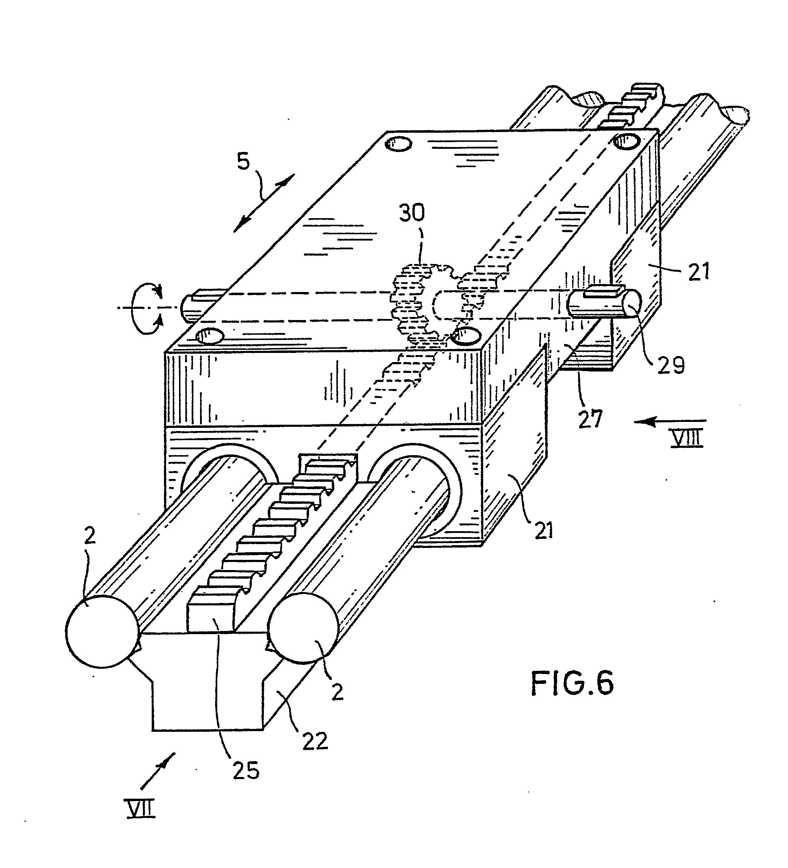

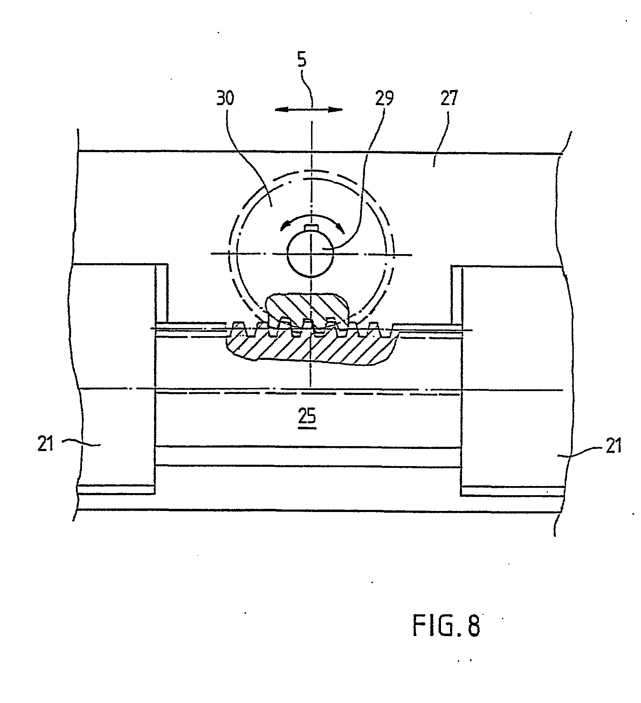

In Fig. 6, 7 und 8 ist dargestellt, wie in einfacher Weise ein Antrieb bei der Linearführung gemäß Fig. 2 und 5 vorgesehen werden kann. Dadurch, daß die Unterstützungsprofilschienen 22 durch die vorteilhafte Anordnung der Führungswellen 2 und der Kugelbüchsen 7 im Bereich zwischen den Führungswellen 2 eine ebene, horizontale Oberfläche 15 aufweisen, ist hier vorteilhafterweise jeweils eine zu den Führungswellen 2 parallele Zahnstange 25 mit einer vertikal nach oben weisenden und quer zu den Führungswellen 2 verlaufenden Verzahnung 26 befestigbar. Es werden nun zwei Schlitten 21 in Verschieberichtung hintereinander auf den Führungswellen 2 angeordnet und über eine Antriebseinheit 27 fest miteinander verbunden. Diese Antriebseinheit 27 weist ein zwischen den beiden Schlitten 21 angeordnetes, mittels einer quer zu den Führungswellen 2 angeordneten Welle 29 drehbeweglich gelagertes Zahnritzel 30 auf, das mit der an der Unterstützungsprofilschiene 22 befestigten Zahnstange 25 in Eingriff steht. Auf der Welle 29, d.h. an beiden Enden, kann ein Motor (nicht dargestellt) angeflanscht werden, dessen Drehbewegung durch die erfindungsgemäße Anordnung in eine geführte Linearbewegung umgesetzt wird.

Mit den erfindungsgemäßen Ausgestaltungen werden somit folgende Vorteile gegenüber bekannten Linearführungen erzielt:

1. Gleiche Tragzahlen für vertikal von oben und unten wirkende Kräfte,

2. bei der Einzelführung gemäß Fig. 1 nur zwei Schraubenreihen und bei der Doppelführung gemäß Fig.2 sogar nur eine Schraubenreihe zur Befestigung der Linearführung auf einer Arbeitsfläche,

3. bei der Doppelführung aufgrund einer einzigen Unterstützungsprofilschiene keine Montagefehler wie Unparallelität möglich, somit längere Lebensdauer,

4. Möglichkeit der Integration eines Antriebes,

5. kompakte, platzsparende Bauweise und

6. durch Verwendung von vier Kugelbüchsen in einem Schlitten sehr hohe Belastungsaufnahmen für aus allen Richtungen einwirkende Kräfte sowie Drehmomente.

**Patentansprüche**

1. Linearführung (1, 20), bestehend aus mindestens einer zylindrischen Führungswelle (2), die mit einem Ansatzsteg (16) parallel verlaufend verbunden, insbesondere verschraubt ist, und mindestens einem auf der Führungswelle (2) linear beweglich geführten Schlitten (4, 21), in dem hierzu mindestens eine zylinderförmige Kugelbüchse (7) angeordnet ist, wobei die Führungswelle (2) auf dem Ansatzsteg (16) aufliegt und die Kugelbüchse (7) und der Schlitten (4, 21) im Verbindungsbereich zwischen dem Ansatzsteg (16) der Führungswelle (2) parallel zu diesen angeordnete, schlitzförmige Durchtrittsöffnungen (11) für den Ansatzsteg (16) aufweisen, dadurch gekennzeichnet, daß der Ansatzsteg (16) längs einer seitlichen Oberkante einer Unterstützungsprofilschiene (3, 22) ausgebildet und die Führungswelle (2) derart mit der Unterstützungsprofilschiene (3, 22) verbunden ist, daß die Winkelhalbierende (13) des Öffnungswinkels (α) der schlitzförmigen Durchtrittsöffnung (11) der Kugelbüchse (7) in einem spitzen Winkel (β), der größer als 0° und kleiner als 90° ist, schräg zur vertikalen Mittelebene (14) der Unterstützungsprofilschiene (3, 22) verläuft.

2. Linearführung nach Anspruch 1, dadurch gekennzeichnet, daß der spitze Winkel (β) derart bemessen ist, daß er zusammen mit dem halben Öffnungswinkel (α/2) der Kugelbüchse (7) einen rechten Winkel ergibt.

3. Linearführung nach Anspruch 1 oder 2, dadurch gekennzeichnet, daß die Unterstützungsprofilschiene (3) im wesentlichen einen rechteckigen Querschnitt aufweist, wobei längs einer seitlichen Oberkante der Ansatzsteg (16) zur Auflage der Führungswelle (2) derart ausgebildet ist, daß seine Mittellinie (23) mit der vertikalen Mittelebene (14) den spitzen Winkel (β) einschließt.

4. Linearführung nach Anspruch 1 oder 2, dadurch gekennzeichnet, daß die Unterstützungsprofilschiene (22) im wesentlichen einen rechteckigen Querschnitt aufweist, wobei längs beider seitlichen Oberkanten jeweils ein Ansatzsteg (16) zur Auflage einer Führungswelle (2) derart ausgebildet ist, daß zwei Führungswellen (2) in symmetrischer Anordnung bezüglich der vertikalen Mittelebene (14) an der Unterstützungsprofilschiene (22) befestigt sind, wobei die Mittellinien (23) der beiden Ansatzstege (16) mit der vertikalen Mittelebene (14) jeweils den spitzen Winkel (β) einschließen.

5. Linearführung nach Anspruch 3 oder 4, dadurch gekennzeichnet, daß die Mittellinie(n) (23) des Ansatzsteges (16) bzw. der Ansatzstege (16) der Unterstützungsprofilschiene (3, 22) mit der Winkelhalbierenden (13) des Öffnungswinkels (α) der Durchtrittsöffnung (11) der Kugelbüchse (7) zusammenfällt/zusammenfallen.

6. Linearführung nach Anspruch 4 oder 5, dadurch gekennzeichnet, daß der Schlitten (21) zur Aufnahme der beiden Führungswellen (2) zwei zueinander parallele Durchgangsbohrungen (9) aufweist, in denen vorzugsweise jeweils zwei Kugelbüchsen (7) axial hintereinander angeordnet sind.

7. Linearführung nach einem oder mehreren der Ansprüche 1 bis 6, dadurch gekennzeichnet, daß die Unterstützungsprofilschiene (3, 22) vertikale Befestigungsbohrungen (24) aufweist, deren Achsen auf der vertikalen Mittelebene (14) der Unterstützungsprofilschiene (3, 22) liegen.

8. Linearführung nach einem oder mehreren der Ansprüche 4 bis 7, dadurch gekennzeichnet, daß die Unterstützungsprofilschiene (22) im Zwischenraum zwischen den beiden Führungswellen (2) eine ebene, horizontale Oberfläche (15) aufweist, auf der eine zu den Führungswellen (2) parallele Zahnstange (25) mit einer vertikal nach oben weisenden und quer zu den Führungswellen (2) verlaufenden Verzahnung (26) befestigt ist.

9. Linearführung nach einem oder mehreren der Ansprüche 4 bis 8, dadurch gekennzeichnet, daß zwei Schlitten (21) in Verschieberichtung hintereinander auf den Führungswellen (2) angeordnet und über eine Antriebseinheit (27) fest miteinander verbunden sind, wobei die Antriebseinheit (27) ein zwischen den beiden Schlitten (21) angeordnetes, mittels einer quer zu den Führungswellen (2) angeordneten Welle (29) drehbeweglich gelagertes und durch einen Motor antreibbares Zahnritzel (30) aufweist, das mit der an der Unterstützungsprofilschiene (22) befestigten Zahnstange (25) in Eingriff steht.

**Claims**

1. Linear guide (1, 20), comprising at least one cylindrical guide shaft (2) which is connected, in particular screwed, to a projecting web (16) so that they run parallel, and at least one carriage (4, 21) which is guided linearly movably on the guide shaft (2) and in which for this purpose at least one cylindrical ball bearing (7) is arranged, the guide shaft (2) lying against the projecting web (16) and the ball bearing (7) and the carriage (4, 21) having in the connection region between the projecting web (16) of the guide shaft (2) slit-shaped through openings (11) arranged parallel thereto for the projecting web (16), characterized in that the projecting web (16) is made along a side upper edge of a profiled support rail (3, 22) and the guide shaft (2) is connected to the profiled support rail (3, 22) such that the line (13) bisecting the opening angle (α) of the slit-shaped through hole (11) of the ball bearing (7) is at an acute angle (β) which is larger than 0° and smaller than 90°, inclined with respect to the vertical centre plane (14) of the profiled support rail (3, 22).

2. Linear guide according to Claim 1, characterized in that the acute angle (β) is dimensioned such that it forms a right angle together with the halved opening angle (α/2) of the ball bearing (7).

3. Linear guide according to Claim 1 or 2, characterized in that the profiled support rail (3) has a substantially rectangular cross-section, the projecting web (16) being made along a side upper edge for the guide shaft (2) to bear against such that the centre line (23) of the projecting web (16) forms the acute angle (β) with the vertical centre plane (14).

4. Linear guide according to Claim 1 or 2, characterized in that the profiled support rail (22) has a substantially rectangular cross-section, a respective projecting web (16) being made along both side upper edges for a guide shaft (2) to bear against such that two guide shafts (2) are secured to the profiled support rail (22) in symmetrical arrangement with respect to the vertical centre plane (14), the centre lines (23) of the two projecting webs (16) each forming the acute angle (β) with the vertical centre plane (14).

5. Linear guide according to Claim 3 or 4, characterized in that the centre line(s) (23) of the projecting web (16) or of the projecting webs (16) of the profiled support rail (3, 22) coincide(s) with the line (13) bisecting the opening angle (α) of the through opening (11) of the ball bearing (7).

6. Linear guide according to Claim 4 or 5, characterized in that the carriage (21) for receiving the two guide shafts (2) has two mutually parallel through bores (9) in which preferably two ball bearings (7) are respectively arranged axially one behind the other.

7. Linear guide according to one or more of Claims 1 to 6, characterized in that the profiled support rail (3, 22) has vertical securing bores (24) whereof the axes lie along the vertical centre plane (14) of the profiled support rail (3, 22).

8. Linear guide according to one or more of Claims 4 to 7, characterized in that the profiled support rail (22) has in the intermediate space between the two guide shafts (2) a plane horizontal surface (15) on which is secured a toothed rack (25) which is parallel to the guide shafts (2) and which has a toothing (26) pointing vertically upwards and running transversely to the guide shafts (2).

9. Linear guide according to one or more of Claims 4 to 8, characterized in that two carriages (21) are arranged on the guide shafts (2), one behind the other in the direction of displacement, and are firmly connected to one another by means of a drive unit (27), the drive unit (27) having a pinion (30) which is arranged between the two carriages (21), which is mounted to be rotationally movable by means of a shaft (29) arranged transversely to the guide shafts (2), which is drivable by a motor and which is in engagement with the toothed rack (25) secured to the profiled support rail (22).

**Revendications**

1. Glissière (1, 20) comprenant au moins un arbre cylindrique de guidage (2), relié, et en particulier vissé à une nervure d'embase (16) parallèlement à celle-ci, et au moins un coulisseau (4, 21) linéairement mobile sur l'arbre de guidage (2), dans lequel est agencée au moins une boîte à billes cylindrique (7), l'arbre de guidage (2) reposant sur la nervure d'embase (16) et la boîte à billes (7) et le coulisseau (4, 21) présentant, dans la région de connexion entre la nervure d'embase (16) et l'arbre de guidage (2), des ouvertures en forme de fentes (11) et parallèles aux derniers pour le passage de la nervure d'embase (16), caractérisée en ce que la nervure d'embase (16) est formée le long d'un bord latéral supérieur d'une glissière profilée de soutien (3, 22) et que l'arbre de guidage (2) est relié à la glissière de soutien (3, 22) de manière telle que la bissectrice (13) de l'angle d'ouverture (α) de la fente de passage (11) de la boîte à bille (7) s'étende obliquement en formant un angle aigu (β) supérieur à 0° et inférieur à 90°, avec le plan médian vertical (14) de là glissière profilée de soutien (3, 22).

2. Glissière selon la revendication 1, caractérisée en ce que l'angle aigu (β) est déterminé de manière telle qu'il forme, avec le demi-angle d'ouverture (α/2) de la boîte à billes (7) un angle droit.

3. Glissière selon la revendication 1 ou 2, caractérisée en ce que la glissière profilée de soutien (3) a une section transversale sensiblement rectangulaire, la nervure d'embase (16) sur laquelle repose l'arbre de guidage (2) étant réalisée le long d'un bord latéral supérieur de manière telle que la ligne médiane (23) délimite avec le plan médian vertical (14) un angle aigu (β).

4. Glissière selon la revendication 1 ou 2, caractérisée en ce que la glissière profilée de soutien (22) possède une section transversale sensiblement rectangulaire, une nervure d'embase (16) sur laquelle repose un arbre de guidage (2) étant respectivement constituée le long des deux bords latéraux supérieurs de manière à ce que deux arbres de guidage (2) soient fixés, symétriquement par rapport au plan médian vertical (14), sur la glissière profilée de soutien (22), les lignes médianes (23) des deux nervures d'embase (16) délimitant avec le plan médian vertical (14) respectivement un angle aigu (β).

5. Glissière selon les revendications 3 ou 4, caractérisée en ce que la ou les lignes médianes (23) de la ou des nervures d'embase (16) de la glissière profilée de soutien (3, 22) coïncident avec la bissectrice (13) de l'angle d'ouverture (α) de l'ouverture de passage (11) de la boîte à billes (7).

6. Glissière selon la revendication 4 ou 5, caractérisée en ce que le coulisseau (21) qui reçoit les deux arbres de guidage (2) présente deux alésages traversants (9) parallèles entre eux dans lesquels sont disposées en ligne, de préférence respectivement deux boîtes à billes (7).

7. Glissière selon l'une ou plusieurs des revendications 1 à 6, caractérisée en ce que la glissière profilée de soutien (3, 22) présente des alésages verticaux de fixation (24) dont les axes sont situés dans le plan médian vertical (14) de la glissière profilée de soutien (3, 22).

8. Glissière selon l'une ou plusieurs des revendications 4 à 7, caractérisée en ce que la glissière profilée de soutien (22) présente, dans l'intervalle entre les deux arbres de guidage (2), une surface plane horizontale (15) sur laquelle est fixée une tige dentée (25) parallèle aux arbres de guidage (2) et dont les dents (26) dont dirigées verticalement vers le haut et s'étendent transversalement par rapport aux arbres de guidage (2).

9. Glissière selon l'une ou plusieurs des revendications 4 à 8, caractérisée en ce que deux coulisseaux (21) sont disposés l'un derrière l'autre dans la direction de mouvement sur les arbres de guidage (2) et reliés fixement entre eux par une unité d'entraînement (27), ladite unité d'entraînement (27) présentant un pignon (30) disposé entre les deux coulisseaux (21) mobile en rotation au moyen d'un axe (29) disposé transversalement par rapport aux arbres de guidage (2) et entraîné par un moteur, ce pignon engrenant avec la tige dentée (25) fixée sur la glissière profilée de soutien (22).

FIG.1

FIG.2

FIG. 3

FIG. 4

FIG.5

FIG.7

FIG.6

FIG. 8